# EUROPÄISCHE PATENTANMELDUNG

(11) **EP 2 568 196 A2**
(43) Veröffentlichungstag der Anmeldung: **13.03.2013**
(21) Anmeldenummer: 12004945.7
(22) Anmeldetag: 04.07.2012
(51) Int. Cl.: F16G 13/04, F16G 13/18

(54) **Beidseits verzahnte Zahnkette sowie Anordnung aus einer solchen Zahnkette und einer Aussenverzahnung einer Zahnketteneingriffseinrichtung**

(30) Priorität: 08.09.2011 DE 102011113935
(71) Anmelder: ROBERT BOSCH GMBH, 70469 Stuttgart (DE)
(72) Erfinder: Albes, Rainer, 31139 Hildesheim (DE); Meyer, Thorsten, 30880 Laatzen (DE)
(74) Vertreter: Thürer, Andreas

(57) **Zusammenfassung**

Die beidseits verzahnte Zahnkette (1) weist einen von dem Gelenköffnungsteilkreis (20) verschiedenen Abtriebsverzahnungsteilkreis (21) der Abtriebsverzahnung (4) auf, welcher von dem Gelenköffnungsteilkreis radial weiter beabstandet angeordnet ist als ein Antriebsverzahnungsteilkreis der Antriebsverzahnung (3) von dem Gelenköffnungsteilkreis radial beabstandet angeordnet ist. Dies erhöht die Eingriffseffektivität.

## Beschreibung

Die Erfindung betrifft eine beidseitig verzahnte Zahnkette mit einer Antriebsverzahnung, mit einer Abtriebsverzahnung, mit Zahnlaschen und mit Gelenkgliedern, bei welcher die Zahnlaschen in Längsrichtung voneinander beabstandete Gelenköffnungen zur Aufnahme der Gelenkglieder aufweist, wobei die Gelenköffnungen einen sich in Längserstreckung der beidseits verzahnten Zahnkette erstreckenden Gelenköffnungsteilkreis formulieren.

Darüber hinaus betrifft die Erfindung eine Anordnung aus wenigstens einer beidseits verzahnten Zahnkette mit einer Antriebsverzahnung und mit einer Abtriebsverzahnung und aus wenigstens einer Außenverzahnung einer Zahnketteneingriffseinrichtung, bei welcher die Abtriebsverzahnung und die Außenverzahnung in einem Kämmbereich miteinander kämmen, und bei welcher die Abtriebsverzahnung einen Abtriebsverzahnungsteilkreis formuliert.

Gattungsgemäße Zahnketten sind aus dem Stand der Technik im Zusammenhang mit Tangentialantrieben gut bekannt. Diese bekannten beidseitig verzahnten Zahnketten zeichnen sich unter anderem häufig durch symmetrische Laschen bzw. wechselseitig gelegte einfach verzahnte Laschen aus, mittels welchen einerseits eine Antriebsverzahnung und andererseits eine Abtriebsverzahnung bereitgestellt werden können. Hierbei ist die Laschenkontur der eingesetzten Zahnlaschen im Wesentlichen auf einen möglichst optimalen Umschlingungseingriff mit einem Zahnkettenrad ausgelegt, mittels welchem eine beidseits verzahnte Zahnkette umgelenkt und/oder angetrieben wird. Jedoch reduziert sich hierbei oft die Eingriffseffektivität einer mit der Abtriebsverzahnung der beidseits verzahnten Zahnkette im Eingriff befindlichen Zahnketteneingriffseinrichtung, wie etwa eines Zahnkettenrades oder einer Zahnstange.

Es ist Aufgabe der Erfindung gattungsgemäße Zahnketten derart weiterzuentwickeln, dass zumindest der vorstehend genannte Nachteil vermieden wird.

Die Aufgabe der Erfindung wird von einer beidseitig verzahnte Zahnkette mit einer Antriebsverzahnung, mit einer Abtriebsverzahnung, mit Zahnlaschen und mit Gelenkgliedern gelöst, bei welcher die Zahnlaschen in Längsrichtung voneinander beabstandete Gelenköffnungen zur Aufnahme der Gelenkglieder aufweist, wobei die Gelenköffnungen einen sich in Längserstreckung der beidseits verzahnten Zahnkette erstreckenden Gelenköffnungsteilkreis formulieren, und wobei die beidseits verzahnte Zahnkette einen von dem Gelenköffnungsteilkreis verschiedenen Abtriebsverzahnungsteitkreis der Abtriebsverzahnung aufweist, welcher von dem Gelenköffnungsteilkreis radial weiter beabstandet angeordnet ist als ein Antriebsverzahnungsteilkreis der Antriebsverzahnung von dem Gelenköffnungsteilkreis radial beabstandet angeordnet ist.

Es versteht sich, dass die vorliegende Betrachtung sich stets auf eine beidseits verzahnte Zahnkette in einem verschränkten Zustand bezieht, bei welchem die beidseits verzahnte Zahnkette in Richtung ihrer Antriebsverzahnung gekrümmt ist, um hierbei ein entsprechendes Antriebszahnkettenrad zumindest teilweise umschlingen zu können.

Dadurch, dass der Abtriebsverzahnungsteilkreis von dem Gelenköffnungsteilkreis derart verschiedenen ist, dass er von dem Gelenköffnungsteilkreis radial weiter beabstandet angeordnet ist als ein Antriebsverzahnungsteilkreis der Antriebsverzahnung von dem Gelenköffnungsteilkreis radial beabstandet angeordnet ist, können die Eingriffsverhältnisse zwischen einer abtriebsverzahnungsseitigen Zahnketteneingriffseinrichtung, wie etwa von außen in die Abtriebsverzahnung eingreifenden Zahnkettenräder oder sonstige verzahnte Bauteile, und der vorliegenden Zahnkette außerordentlich gut verbessert werden. Dies gilt sowohl für einen Eingriff an der Abtriebsverzahnung an einem Umschlingungsbereich, an welchem die beidseits verzahnte Zahnkette antriebsverzahnungsseitig ein Zahnkettenrad zumindest teilweise umschlingt, als auch für einen tangentialen Eingriff.

Nach dem Stand der Technik weisen beidseits verzahnte Zahnketten hinsichtlich ihrer Antriebsverzahnung und Abtriebsverzahnung einen bezüglich des Gelenköffnungsteilkreises identisch beabstandeten Antriebsverzahnungsteilkreis und Abtriebsverzahnungsteilkreis auf.

Teilkreise bei Zahnketten, so auch der vorliegende Gelenköffnungsteilkreis und die vorliegenden Antriebs- und Abtriebsverzahnungsteilkreise, werden hinsichtlich ihrer Geometrie auch durch d = m • z = (p/p) • z, mit d = Teilkreisdurchmesser; m = Modul; z = Zähnezahl und p = Teilkreisteilung, errechnet. Der Teilkreis ist als direkt von der Teilung abhängig. Im gestreckten Zustand der beidseits verzahnten Zahnkette bzw. ohne Anstellwinkel der Zahnlaschen liegt der Gelenköffnungsteilkreis auf der Gelenkmittelpunktslinie. Je nach Abwinkelung der beidseits verzahnten Zahnkette kommt es jedoch noch zu einer geringfügigen Verschiebung aufgrund einer Verlagerung der Berührungspunkte zwischen den Gelenkgliedern und den Zahnlaschen, welche für vorliegende Betrachtung jedoch vernachlässigbar gering ausfällt.

Im Sinne der Erfindung definieren sich der Abtriebsverzahnungsteilkreis und der Antriebsverzahnungsteilkreis jeweils durch einen quer zu einer Wälzstrecke verlaufenden Mittenbereich, um welchen sich in die beidseits verzahnte Zahnkette radial eingreifende Zähne herum auf den Zähnen der Zahnlaschen abwälzen können. Der Abstand des jeweiligen Mittenbereichs ergibt hierbei das Durchmessermaß für den Abtriebsverzahnungsteilkreis bzw. für den Antriebsverzahnungsteilkreis. Hierbei kann es sein, dass es beispielsweise zwischen zwei aufeinander abwälzenden Zähnen der Abtriebsverzahnung und eines entsprechenden Abtriebszahnkettenrades lediglich zu einer festen, entlang der Wälzstrecke nicht wandernden Linienberührung kommt, durch welche dann die Lage des Abtriebsverzahnungsteilkreises eindeutig definiert wäre.

Eine außergewöhnlich vorteilhafte Ausführungsvariante sieht vor, dass die Abtriebsverzahnung eine Abtriebsverzahnungsteilung und die Antriebsverzahnung eine Antriebsverzahnungsteilung aufweist, wobei die Abtriebsverzahnungsteilung größer ist als die Antriebsverzahnungsteilung.

Speziell in diesem Zusammenhang ist es vorteilhaft, wenn die Abtriebsverzahnung ein Abtriebsverzahnungsmodul und die Antriebsverzahnung ein Antriebsverzahnungsmodul aufweist, wobei das Abtriebsverzahnungsmodul größer ist als das Antriebsverzahnungsmodul. Hierdurch gelingt es konstruktiv besonders einfach, hinsichtlich der Abtriebsverzahnung eine wesentlich verbesserte Eingriffsgeometrie, insbesondere in Bezug auf eine lange Eingriffsstrecke bzw. einen hohen Überdeckungsgrad, mit einem Abtriebszahnkettenrad erzielen zu können, unabhängig von einer Eingriffsgeometrie der Antriebsverzahnung der beidseits verzahnten Zahnkette.

Insofern ergibt sich bei gleicher Zähnezahl der verschränkten beidseits verzahnten Zahnkette ein weiterer Teilkreis, der nur für die Eingriffsverhältnisse zwischen der Abtriebsverzahnung und dem hiermit kämmenden Abtriebszahnkettenrad maßgeblich ist.

Insofern zeichnet sich die beidseits verzahnte Zahnkette durch einen Abtriebsverzahnungsteilkreis und einen Antriebsverzahnungsteilkreis aus, die von dem Gelenköffnungsteilkreis radial unterschiedlich weit beabstandet angeordnet sind.

Der vorliegende Abtriebsverzahnungsteilkreis ist an der beidseits verzahnten Zahnkette in einem Umschlingungsbereich besonders gut ersichtlich, in welchem die Zahnkette antriebsverzahnungsseitig mit einem innenliegenden Zahnkettenrad kämmt und dieses hierbei zumindest teilweise umschlingt.

Dementsprechend ist es baulich vorteilhaft, wenn die Zahnlaschen hinsichtlich der Antriebsverzahnung und der Abtriebsverzahnung asymmetrisch ausgestaltet sind.

Als Zahnketteneingriffseinrichtung werden im Sinne der Erfindung in erster Linie Zahnkettenräder und/oder Zahnstangen definiert.

Eine weitere außerordentlich vorteilhafte Ausführungsvariante sieht vor, dass die beidseitig verzahnte Zahnkette zumindest abtriebsverzahnungsseitig eine Abtriebsverzahnungszahnkontur mit einer veränderlichen Hüllkurve aus wenigstens zwei drehbeweglich zueinander angeordneten Einzelzähnen aufweist. Hierdurch kann die Eingriffsgeometrie zahnkettenseitig besonders gut an ein entsprechendes Abtriebszahnkettenrad angepasst werden.

Nach einem weiteren Aspekt der Erfindung wird die vorliegende Aufgabe auch von einer Anordnung aus wenigstens einer beidseits verzahnten Zahnkette mit einer Antriebsverzahnung und mit einer Abtriebsverzahnung und aus wenigstens einer Außenverzahnung einer Zahnketteneingriffseinrichtung gelöst, bei welcher die Abtriebsverzahnung und die Außenverzahnung in einem Kämmbereich miteinander kämmen, und bei welcher die Abtriebsverzahnung einen Abtriebsverzahnungsteilkreis formuliert, wobei der Abtriebsverzahnungsteilkreis innerhalb der Außenverzahnung der Zahnketteneingriffseinrichtung angeordnet ist.

Speziell durch das Verschieben des kettenseitigen Teilkreises können einzelne Hülltriebe zur Kraftweiterleitung konstruktiv einfacher miteinander gekoppelt werden. Bei Tangentialantrieben können insbesondere durch eine bessere Überdeckung der Geometrien gleichmäßige Bewegungen bzw. Geschwindigkeiten erzielt werden. Insofern können externe Bauteile tangential effektiver in die beidseits verzahnte Zahnkette eingreifen und somit von der vorliegenden Zahnkette sicherer mit bewegt werden.

Eine bevorzugte Ausführungsvariante sieht vor, dass der Abtriebsverzahnungsteilkreis weiter radial neben dem Gelenköffnungsteilkreis angeordnet ist als der Antriebsverzahnungsteilkreis, wodurch insbesondere ein besonders effektiver Eingriff eines äußeren Zahnkettenrades in die Außenkontur der vorliegenden Zahnkette im Umschlingungsbereich eines inneres Zahnkettenrades ermöglicht ist.

Vorteilhaft ist es des Weiteren, wenn der Abtriebsverzahnungsteilkreis im Kämmbereich mit einem Außenverzahnungsteilkreis der Außenverzahnung zumindest teilweise zusammenfällt oder den Außenverzahnungsteilkreis tangiert. Hierdurch kann ein besonders langer und verschleißarmer Kontakt zwischen der beidseits verzahnten Zahnkette und den Zähnen eines Zahnkettenrades erreicht werden.

Ein besonders inniger Eingriff an der Abtriebsverzahnung kann erzielt werden, wenn der Abtriebsverzahnungsteilkreis hinsichtlich einer in Richtung der Antriebsverzahnung gekrümmten Zahnkette eine größere Teilung als die Teilung des Gelenköffnungsteilkreises aufweist, wie vorstehend bereits erwähnt ist.

Außerordentlich vorteilhaft ist es weiter, wenn die Abtriebsverzahnung eine Modulverzahnung mit einem Flankenwinkel zwischen 15° und 30°, vorzugsweise zwischen 19° und 25°, aufweist. Vorzugsweise ist ein Flankenwinkel von 20° vorgesehen, da hierdurch eine besonders lange Eingriffsstrecke an der Abtriebsverzahnung bezüglich des Abtriebszahnkettenrades erzielt werden kann.

Insofern können sich eine Innen- und Außenseite der beidseits verzahnten Zahnkette erheblich in ihrer jeweiligen Gestalt unterscheiden, wobei aber auch noch andere Geometrien und Winkel je nach Anwendungsfall möglich sind.

Die Innenseite bezieht sich vorliegend auf die Antriebsverzahnung, welche ein Antriebszahnkettenrad zumindest teilweise umschlingt. Dementsprechend bezieht sich die Außenseite auf die Abtriebsverzahnung, welche mit einem Abtriebszahnkettenrad kämmt.

Vorteilhafter Weise sind die abtriebsverzahnungsseitig anordneten Zähne höher ausgestaltet als die antriebsverzahnungsseitig angeordneten Zähne. Des Weiteren zeichnen sich die Zähne der Abtriebsverzahnung idealerweise durch gekappte Zahnenden aus, wohingegen Zahnenden der Zähne der Antriebsverzahnung vorteilhafter Weise spitzer zulaufen. Insofern weisen die Zähne der Abtriebsverzahnung und die Zähne der Antriebsverzahnung aufgrund ihrer unterschiedlichen Gestalt jeweils verschiedene Halbwertsbreitenwerte auf. Insbesondere kumuliert kann hierdurch ein verbessertes Eingriffsverhalten sowohl an der Antriebsverzahnung als auch an der Abtriebsverzahnung erzielt werden. Vorzugsweise sind die Halbwertsbreitenwerte der Abtriebsverzahnung größer als diejenigen der Antriebsverzahnung.

Vorteilhafter Weise kann die Zahngeometrie des Abtriebszahnkettenrades und der Abtriebsverzahnung der vorliegenden beidseits verzahnten Zahnkette unabhängig von den Modalitäten der Antriebsverzahnung gewählt werden. Bevorzugt unterscheidet sich die Zahngeometrie dadurch, dass die Abtriebszähne größer sind als die Antriebszähne.

Die Hüllkurve um entsprechend außenliegende verschränkte Zahnlaschenzähne kann idealweise praktisch einem normalen modulverzahnten Stirnrad mit einem 20° Flankenwinkel entsprechen, wobei sich der Abtriebsverzahnungsteilkreis der beidseits verzahnten Zahnkette und der Abtriebszahnkettenradteilkreis des außen eingreifenden Abtriebszahnkettenrades beide innerhalb der Außenverzahnung des Abtriebszahnkettenrades befinden und aufeinander abwälzen können, wie dies bei einer Stirnradpaarung der Fall ist.

Bei einer symmetrisch ausgestalteten Zahnlasche mit beidseits gleicher Zahnform ergeben sich aus einer Hüllkurve um die jeweils hintereinander liegenden verschränkten Zahnlaschen unterschiedliche Zahnformen auf der nach innen gekrümmten Seite - Antriebsverzahnung - und auf der nach außen gekrümmten Seite - Abtriebsverzahnung. Da es sich bei einer derartig beidseits verzahnten Zahnkette im Wesentlichen um einen Umschlingungstrieb handelt und diese Zahnkette in der Regel ein Antriebszahnkettenrad mit einer Vielzahl an Zähnen umfasst, ist die diesbezügliche symmetrisch ausgestaltete Zahnlasche für diesen innenseitigen bzw. antriebsseitigen Eingriff optimiert, also wegen der symmetrischen Ausgestaltung sowohl antriebsverzahnungsseitig als auch abtriebsverzahnungsseitig. Insofern müssen die Zahnformen der Außenverzahnung des Abtriebszahnrades, insbesondere im Hinblick auf eine Profilverschiebung und/oder einen Unterschnitt, korrigiert werden. Aufgrund einer gegensinnigen Verschränkung auf der Außenseite der Zahnkette weist ein hierin eingreifendes Zahnkettenrad eine sehr ungünstige Zahnform auf, bei welcher praktisch kaum noch ein zufriedenstellender Eingriff mehr möglich ist. Dieser nachteilige Umstand ist vorliegend vorteilhafter Weise nicht mehr vorhanden.

Kumulativ ist es vorteilhaft, wenn die beidseits verzahnte Zahnkette Führungslaschen umfasst, welche nur einseitig, vorzugsweise an der Antriebsverzahnung, führungswirkend ausgeführt sind. Hierdurch kann sichergestellt werden, dass die Zahnkette besonders ruhig und verschleißarm läuft, da sie radial im Wesentlichen nur an den innenliegenden Zahnkettenrädern geführt ist. Darüber hinaus müssen abtriebsverzahnungsseitig hinsichtlich der Breite einer mit der Zahnkette kämmenden Zahnketteneingriffseinrichtung so gut wie keine Einschränkungen durch die Zahnkette hingenommen werden. Des Weiteren kann hinsichtlich Tangentialantriebe eine Übertragungsgenauigkeit vorteilhaft erhöht werden.

Eine weitere Verbesserung der Laufeigenschaften der beidseitig verzahnten Zahnkette kann erzielt werden, wenn die Gelenkglieder jeweils ein Wiegegelenk umfassen. An dieser Stelle sei erwähnt, dass die Gelenkglieder jedoch auch nur als Zapfen mit einem entsprechend angepassten Querschnitt oder als einfache Rundbolzen oder dergleichen ausgeführt sein können.

Der vorstehend beschriebene Abtriebsverzahnungsteilkreis kann besonders einfach realisiert werden, wenn die Zahnlaschen hinsichtlich der Antriebsverzahnung und der Abtriebsverzahnung asymmetrisch ausgestaltet sind. Hierdurch ist es möglich, die Antriebsverzahnung beispielsweise hinsichtlich eines Antriebszahnkettenrades und die Abtriebsverzahnung beispielsweise hinsichtlich eines Abtriebszahnkettenrades zu optimieren.

Mit der vorliegenden Erfindung kann insbesondere eine Verbesserung des Überdeckungsgrades bei einem Tangentialeingriff erzielt werden. Darüber hinaus ist ein besonders vorteilhafter Eingriff eines Kettenrades in die Außenkontur der vorliegenden Zahnkette mit abgewinkelten Laschen in einem Umschlingungsbogen eines innen angetriebenen Zahnkettenrades speziell zur Koppelung von mehreren Kettenantrieben möglich.

Weitere Vorteile, Ziele und Eigenschaften vorliegender Erfindung werden anhand anliegender Zeichnung und nachfolgender Beschreibung erläutert, in welchen beispielhaft unterschiedliche beidseitig verzahnte Zahnketten mit einem Abtriebsverzahnungsteilkreis, der innerhalb der Verzahnung einer Zahnketteneingriffseinrichtung angeordnet ist, dargestellt und beschrieben sind. Komponenten, welche in den einzelnen Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren beziffert bzw. erläutert sein müssen. In der Zeichnung zeigen:
- Figur 1: schematisch eine Ansicht einer Anordnung aus einer beidseits verzahnten Zahnkette, einem inneren Antriebs- bzw. Umlenkzahnkettenrad und einem äußeren Abtriebszahnkettenrad;
- Figur 2: schematisch eine Ansicht eines Zahnkettenantriebes mit der Anordnung aus der Figur 1;
- Figur 3: schematisch eine Seitenansicht einer weiteren Zahnkette mit antriebsseitig ausgestalteten Führungslaschen;
- Figur 4: schematisch eine Aufsicht der weiteren Zahnkette aus der Figur 3;
- Figur 5: schematisch eine Ansicht einer weiteren Anordnung aus einer beidseitig verzahnten Zahnkette und aus einem darin tangential eingreifenden Abtriebszahnkettenrad;
- Figur 6: schematisch eine weitere Ansicht der Anordnung aus der Figur 5 in einer weitergedrehten Stellung des Abtriebszahnkettenrades; und
- Figur 7: schematisch eine Ansicht einer anderen Anordnung aus der beidseitig verzahnten Zahnkette aus den Figuren 5 und 6 und aus einer darin tangential eingreifenden Abtriebszahnstange; und
- Figur 8: schematisch eine Ansicht einer herkömmlichen beidseits verzahnten Zahnkette aus dem Stand der Technik im Eingriff mit einem Abtriebszahnkettenrad.

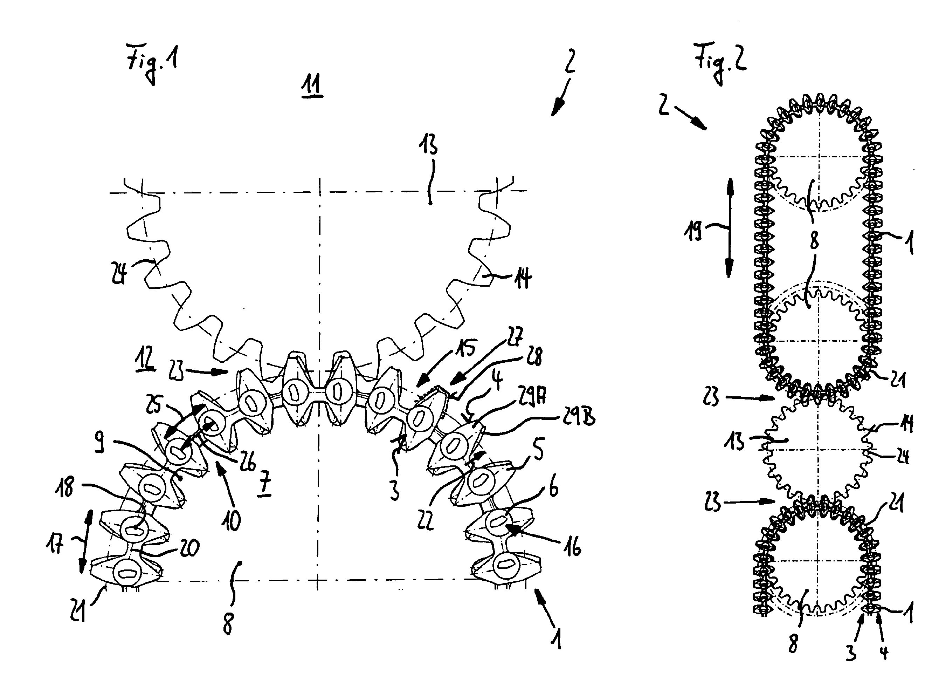

Die in den Figuren 1 und 2 gezeigte beidseitig verzahnte Zahnkette 1 umfasst gemäß der illustrierten Anordnung 2 eine Antriebsverzahnung 3, eine Abtriebsverzahnung 4, asymmetrische Zahnlaschen 5 und Gelenkglieder 6.

Gemäß der Anordnung 2 kämmt die Zahnkette 1 antriebsverzahnungsseitig 7 mit einem innen angeordneten Antriebs- bzw. Umlenkzahnkettenrad 8. Hierbei umschlingt die Zahnkette 1 das Antriebs- bzw. Umlenkzahnkettenrad 8 mit einem Umschlingungsradius von ca. 180°, wobei Antriebszähne 9 (hier nur exemplarisch beziffert) des Antriebs- bzw. Umlenkzahnkettenrades 8 antriebsverzahnungsseitig 7 in entsprechende Zahnlaschenzwischenräume 10 der asymmetrischen Zahnlaschen 5 eingreifen.

Stirnseitig 11 des Antriebs- bzw. Umlenkzahnkettenrades 8 befindet sich abtriebsverzahnungsseitig 12 ein Abtriebszahnkettenrad 13 als Sonderzahnkettenrad, welches mit seiner Außenverzahnung 14 in entsprechende Zahnlaschenzwischenräume 15 der Abtriebsverzahnung 4 der Zahnkette 1 eingreift.

Die Geometrie der Außenverzahnung 14 ist hinsichtlich der Zahnform und des Eingriffswinkels speziell der Zahnkette 1 angepasst, um möglichst optimale Eingriffs- und Festigkeitsverhältnisse zu erreichen. Durch das Abwinkeln im Bereich der Gelenkglieder 6 verändert sich die Eingriffsgeometrie, gebildet durch die Winkelstellung der miteinander verbundenen asymmetrischen Zahnlaschen 5.

Ein wesentliches Ziel der Erfindung ist es hierbei, eine möglichst lange Eingriffsstrecke bzw. Überdeckung zwischen abtriebsverzahnungsseitigen 12 Zahnkettenzähnen (hier nicht gesondert beziffert) der asymmetrischen Zahnlaschen 5 und der Außenverzahnung 14 des Abtriebszahnkettenrades 13 zu erreichen.

Die einzelnen asymmetrischen Zahnlaschen 5 sind mittels der Gelenkglieder 6 gelenkig miteinander verbunden, wobei die Gelenkglieder 6 als Wiegegelenke 16 realisiert sind. Zur Aufnahme der Gelenkglieder 6 weisen die asymmetrischen Zahnlaschen 5 in Längsrichtung 17 voneinander beabstandete Gelenköffnungen 18 auf, in welchen die Gelenkglieder 6 gelagert sind.

Auf Höhe der Gelenköffnungen 18 erstreckt sich in Längserstreckung 19 (siehe Figur 2) der beidseits verzahnten Zahnkette 1 ein Gelenköffnungsteilkreis 20, der bei herkömmlichen Zahnketten den eigentlichen Teilkreis definiert. Vorteilhafter Weise weist die vorliegende Zahnkette 1 jedoch einen Abtriebsverzahnungsteilkreis 21 auf, der hiervon und von einem Antriebsverzahnungsteilkreis verschieden ist. Insofern zeichnet sich die beidseits verzahnte Zahnkette 1 durch den Abtriebsverzahnungsteilkreis 21 und einen Antriebsverzahnungsteilkreis (hier nicht eingezeichnet) aus, die jeweils von dem Gelenköffnungsteilkreis 20 radial unterschiedlich weit beabstandet angeordnet sind.

Der Abtriebsverzahnungsteilkreis 21 liegt hierbei weiter radial 22 außen als der Gelenköffnungsteilkreis 20, wodurch der Abtriebsverzahnungsteilkreis 21 zumindest im Kämmbereich 23 der Anordnung 2 innerhalb der Außenverzahnung 14 des Abtriebszahnkettenrades 13 liegt, ähnlich wie dies bei einem Stirnradpaar der Fall ist.

Vorteilhafter Weise fällt der Abtriebsverzahnungsteilkreis 21 im Kämmbereich 23 mit einem Außenverzahnungsteilkreis 24 der Außenverzahnung 14 zumindest teilweise zusammen oder tangiert diesen.

Der Abtriebsverzahnungsteilkreis 21 besitzt hinsichtlich einer in Richtung der Antriebszähne 9 gekrümmten Zahnkette 1 eine größere Teilung 25 als die Teilung 26 des Gelenköffnungsteilkreises 20, wodurch wesentlich bessere Eingriffsbedingungen im Kämmbereich 23 erzielt werden können.

Konstruktiv einfach kann dies erzielt werden, da die Zahnlaschen 5 hinsichtlich der Antriebsverzahnung 3 und der Abtriebsverzahnung 4 asymmetrisch ausgestaltet sind.

Hierbei bilden zwei in Richtung eines einzigen Gelenkgliedes 6 nebeneinander angeordnete - senkrecht zur Papierebene - Zahnlaschen 5 zumindest abtriebsseitig gemeinsam eine Abtriebsverzahnungszahnkontur 27 mit einer Hüllkurve 28 der Abtriebsverzahnungszahnkontur 27, welche von zwei in der Einbaulage nicht deckungsgleich ausgestalteten Einzelzähnen 29A und 29B (bezüglich der nebeneinander angeordneten Zahnlaschen 5) gebildet ist. Die Einzelzähne 29A, 29B können dabei beispielsweise spiegelbildlich zueinander ausgebildet sein. Diese Hüllkurve 28 ist veränderlich, je nachdem wie stark die einzelnen axial hintereinander angeordneten Zahnlaschen 5 der beidseitig verzahnte Zahnkette 1 insbesondere im Umschlingungsbereich des Antriebs- bzw. Umlenkzahnkettenrad 8 zueinander verschränkt sind.

Die gezeigte Anordnung 2 zeigt ein erstes Ausführungsbeispiel eines doppelseitigen Zahnkettenantriebes 30, bei welchem es sich bei den mit dem Bezugszeichen 8 versehenen Antriebs- bzw. Umlenkzahnkettenrädern um normal verzahnte Zahnkettenräder handelt, deren Verzahnungen für einen Umschlingungstrieb ausgeführt sind. Die beiden Zahnkettenteilantriebe 31 und 32 des Zahnkettenantriebes 30 sind über den Eingriff des Abtriebszahnkettenrades 13 zur Kraft- und Bewegungsübertragung formschlüssig miteinander verbunden.

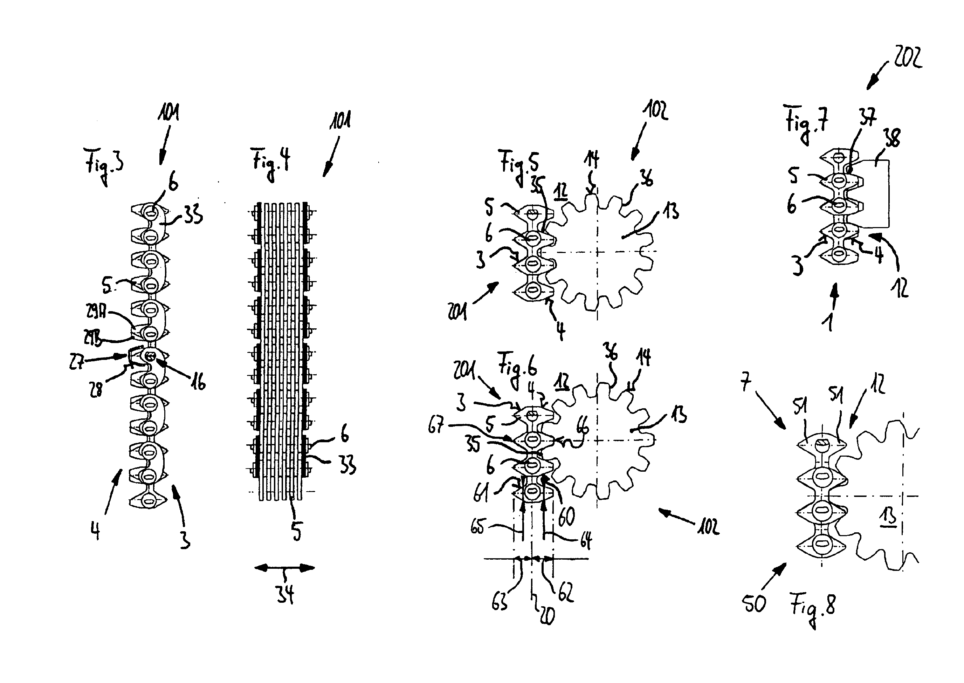

Die in den Figuren 3 und 4 gezeigte weitere mit einer Antriebsverzahnung 3 und einer Abtriebsverzahnung 4 versehene beidseitig verzahnte Zahnkette 101 ist in einem gestreckten Zustand dargestellt. Hierbei weist die beidseitig verzahnte Zahnkette 101 einen Abtriebsverzahnungsteilkreis aufweist, welcher von einem Gelenköffnungsteilkreis radial weiter beabstandet angeordnet ist als ein Antriebsverzahnungsteilkreis von dem Gelenköffnungsteilkreis radial beabstandet angeordnet ist. Die weitere Zahnkette 101 umfasst darüber hinaus neben asymmetrischen Zahnlaschen 5 und entsprechenden Gelenkgliedern 6 auch noch einseitig wirkende Führungslaschen 33, die im Wesentlichen lediglich auf der Seite der Antriebsverzahnung 3 gegenüber einem Antriebs- bzw. Umlenkzahnkettenrad 8 die beidseitig verzahnte Zahnkette 101 führen. Die Führungslaschen 33 haben im Wesentlichen die Aufgabe, einen Geradeauslauf der Zahnkette 101 auf einer Außenverzahnung 14 des Abtriebszahnkettenrades 13 in Querrichtung 34 zu stabilisieren.

Hinsichtlich der in den Figuren 3 und 4 gezeigten Zahnkette 101 wird die Führung nur auf dem Antriebs- bzw. Umlenkzahnkettenrad 8 benötigt; insofern ist die Führungslasche 33 im Sinne der Erfindung auch nur einseitig ausgeführt. Vorteilhafter Weise kann hierdurch erzielt werden, dass eine an der Abtriebsverzahnung 4 angreifende Zahnketteneingriffseinrichtung in ihrer Breite nicht zwangsläufig an die Breite der beidseitig verzahnten Zahnkette 101 gebunden ist, sondern sie kann bei Bedarf breiter ausgeführt sein als die Zahnkette 101.

Bei der in den Figuren 5 und 6 gezeigten weiteren Anordnung 102 greift ein Abtriebszahnkettenrad 13 mit seiner Außenverzahnung 14 tangential in eine Abtriebsverzahnung 4 einer alternativen beidseitig verzahnten Zahnkette 201 ein. Die beidseitig verzahnte Zahnkette 201 hat auch in diesem Ausführungsbeispiel eine von der Abtriebsverzahnung 4 verschieden ausgestaltete Antriebsverzahnung 3, wobei die beiden unterschiedlichen Verzahnungen 3 und 4 konstruktiv besonders einfach wieder durch asymmetrisch gestaltete Zahnlaschen 5 realisiert sind. Die asymmetrischen Zahnlaschen 5 sind mittels Gelenkglieder 6 miteinander verbunden. Darüber hinaus sind die asymmetrischen Zahnlaschen 5 abtriebsverzahnungsseitig 12 in ihrer Laschenkontur in einem für den tangentialen Eingriff bestimmten Bereich 35 an eine andere Zahnkontur 36 und an einen anderen Eingriffswinkel des tangentialen Abtriebszahnkettenrad 13 derart angepasst, dass auch hier eine möglichst hohe Überdeckung für einen besonders harmonischen, gleichförmigen und spielfreien Ablauf erreicht wird. Um sowohl mit einem Antriebszahnkettenrad (nicht gezeigt) als auch mit dem Abtriebszahnkettenrad 13 optimal korrespondieren zu können, besitzt auch die beidseits verzahnte Zahnkette 201 einen von dem Gelenköffnungsteilkreis 20 verschiedenen Abtriebsverzahnungsteilkreis 21 der Abtriebsverzahnung 4, welcher von dem Gelenköffnungsteilkreis 20 radial weiter beabstandet angeordnet ist als ein Antriebsverzahnungsteilkreis der Antriebsverzahnung 3 von dem Gelenköffnungsteilkreis 20 radial beabstandet angeordnet ist (siehe insbesondere Figur 1).

Bei der in der Figur 7 gezeigten anderen Anordnung 202 greift in eine beidseits verzahnte Zahnkette 1 mit einer Antriebsverzahnung 3 und mit einer Abtriebsverzahnung 4 eine Außenkontur 37 eines Zahnstangensegmentes 38 eines hier nicht weiter gezeigten Abtriebs abtriebsverzahnungsseitig 12 ein. Die in diesem Ausführungsbeispiel gezeigte beidseits verzahnte Zahnkette 1 zeichnet sich weiter auch wieder durch asymmetrische Zahnlaschen 5 und durch Gelenkglieder 6, die diese Zahnlaschen 5 miteinander verbinden, aus. Die gemäß der anderen Anordnung 202 gezeigte alternative Zahnkette 201 entspricht hierbei der beidseitig verzahnten Zahnkette 1 aus den Figuren 1 und 2.

Die in der Figur 8 noch zum Vergleich gezeigte aus dem Stand der Technik bekannte beidseitig verzahnte Zahnkette 50 weist symmetrisch ausgebildete Antriebs- und Abtriebsverzahnungen 3 bzw. 4 mit beidseits identisch ausgebildeten Zähnen 51 auf. Insofern müssen sowohl ein Abtriebszahnkettenrad 13 als auch ein Antriebszahnkettenrad (hier nicht gezeigt) jeweils mit identisch ausgebildeten Zähnen 51 kämmen.

Speziell im Vergleich hierzu erkennt man an den erfindungsgemäßen beidseitig verzahnten Zahnketten 1, 101 bzw. 201 sehr gut, dass dort abtriebsverzahnungsseitig 12 orientierte Abtriebszähne 60 (exemplarisch an der Figur 6 beziffert) gegenüber antriebsverzahnungsseitig 7 orientierten Antriebszähnen 61 asymmetrisch ausgestaltet sind. Insbesondere weisen die abtriebsverzahnungsseitig 12 orientierten Abtriebszähne 60 gegenüber den antriebsverzahnungsseitig 7 orientierten Antriebszähnen 61 eine größere Höhe 62 auf als die Höhe 63 der Antriebszähne 61.

Darüber hinaus weisen die Abtriebszähne 60 und die Antriebszähne 61 aufgrund ihrer unterschiedlichen Gestalt jeweils verschiedene Halbwertsbreitenwerte 64 bzw. 65 auf. Dieser ist bei den Abtriebszähnen 60 größer als bei den Antriebszähnen 61.

Des Weiteren zeichnen sich die Abtriebszähne 60 durch gekappte Zahnenden 66 aus, wohingegen Zahnenden 67 der Antriebszähne 61 spitzer zulaufen (vgl. Figur 6).

Die Abtriebszähne 60 hinsichtlich der Ausführungsbeispiele gemäß den Figuren 1 bis 4 und 7 setzen sich aus den zuvor bereits beschriebenen Einzelzähnen 29A und 29B zusammen.

Es versteht sich, dass es sich bei den vorstehend erläuterten Ausführungsbeispielen lediglich um erste Ausgestaltungen der erfindungsgemäßen beidseitig verzahnten Zahnkette handelt. Insofern beschränkt sich die Ausgestaltung der Erfindung nicht auf diese Ausführungsbeispiele.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Zahnkette
- 2: Anordnung
- 3: Antriebsverzahnung
- 4: Abtriebsverzahnung
- 5: Zahnlaschen
- 6: Gelenkglieder
- 7: antriebsverzahnungsseitig
- 8: Antriebs- bzw. Umlenkzahnkettenrad
- 9: Antriebszähne
- 10: erste Zahnlaschenzwischenräume
- 11: stirnseitig
- 12: abtriebsverzahnungsseitig
- 13: Abtriebszahnkettenrad
- 14: Außenverzahnung
- 15: weitere Zahnlaschenzwischenräume
- 16: Wiegegelenk
- 17: Längsrichtung
- 18: Gelenköffnungen
- 19: Längserstreckung
- 20: Gelenköffnungsteilkreis
- 21: Abtriebsverzahnungsteilkreis
- 22: radial
- 23: Kämmbereich
- 24: Außenverzahnungsteilkreis
- 25: Abtriebsverzahnungsteilung
- 26: Teilung
- 27: Zahnkontur
- 28: Hüllkurve
- 29A: Einzelzähne
- 29B: weitere Einzelzähne
- 30: Zahnkettenantriebes
- 31: erster Zahnkettenteilantrieb
- 32: zweiter Zahnkettenteilantrieb
- 33: Führungslaschen
- 34: Querrichtung
- 35: Bereich
- 36: andere Zahnkontur
- 37: Außenkontur
- 38: Zahnstangensegment
- 50: bekannte Zahnkette
- 51: identisch ausgebildete Zähne
- 60: Abtriebszähne
- 61: Antriebszähne
- 62: größere Höhe
- 63: kleinere Höhe
- 64: größerer Halbwertsbreitenwert
- 65: kleinerer Halbwertsbreitenwert
- 66: gekappte Zahnenden
- 67: spitzere Zahnenden
- 101: weitere Zahnkette
- 102: weitere Anordnung
- 201: alternative Zahnkette
- 202: andere Anordnung

## Patentansprüche

1. Beidseitig verzahnte Zahnkette (1; 101; 201) mit einer Antriebsverzahnung (3), mit einer Abtriebsverzahnung (4), mit Zahnlaschen (5) und mit Gelenkgliedern (6), bei welcher die Zahnlaschen (5) in Längsrichtung (17) voneinander beabstandete Gelenköffnungen (18) zur Aufnahme der Gelenkglieder (6) aufweist, wobei die Gelenköffnungen (18) einen sich in Längserstreckung (19) der beidseits verzahnten Zahnkette (1) erstreckenden Gelenköffnungsteilkreis (20) formulieren,
**dadurch gekennzeichnet,dass**
die beidseits verzahnte Zahnkette (1; 101; 201) einen von dem Gelenköffnungsteilkreis (20) verschiedenen Abtriebsverzahnungsteilkreis (21) der Abtriebsverzahnung (4) aufweist, welcher von dem Gelenköffnungsteilkreis (20) radial weiter beabstandet angeordnet ist als ein Antriebsverzahnungsteilkreis der Antriebsverzahnung (3) von dem Gelenköffnungsteilkreis (20) radial beabstandet angeordnet ist.

2. Beidseitig verzahnte Zahnkette (1; 101; 201) nach Anspruch 1,
**dadurch gekennzeichnet,dass**
die Abtriebsverzahnung (4) eine Abtriebsverzahnungsteilung und die Antriebsverzahnung (3) eine Antriebsverzahnungsteilung aufweist, wobei die Abtriebsverzahnungsteilung (25) größer ist als die Antriebsverzahnungsteilung.

3. Beidseitig verzahnte Zahnkette (1; 101; 201) nach Anspruch 1 oder 2,
**dadurch gekennzeichnet,dass**
die Abtriebsverzahnung (4) eine Modulverzahnung mit einem Flankenwinkel zwischen 15° und 30°, vorzugsweise zwischen 19° und 25°, aufweist.

4. Beidseitig verzahnte Zahnkette (1; 101; 201) nach einem der Ansprüche 1 bis 3,
**dadurch gekennzeichnet,dass**
die beidseitig verzahnte Zahnkette (1; 101; 201) zumindest abtriebsverzahnungsseitig (12) eine Abtriebsverzahnungszahnkontur (27) mit einer veränderlichen Hüllkurve (28) aus wenigstens zwei drehbeweglich zueinander angeordneten Einzelzähnen (29A, 29B) aufweist.

5. Beidseitig verzahnte Zahnkette (1; 101; 201) nach einem der Ansprüche 1 bis 4,
**dadurch gekennzeichnet,dass**
die beidseitig verzahnte Zahnkette (1; 101; 201) bezogen auf den Gelenköffnungsteilkreis (20) asymmetrische angeordnete Verzahnungsteilkreise aufweist.

6. Beidseitig verzahnte Zahnkette (1; 101; 201) nach einem der Ansprüche 1 bis 5,
**dadurch gekennzeichnet,dass**
die Zahnlaschen (5) hinsichtlich der Antriebsverzahnung (3) und der Abtriebsverzahnung (4) asymmetrisch ausgestaltet sind.

7. Beidseitig verzahnte Zahnkette (1; 101; 201) nach einem der Ansprüche 1 bis 6,
**dadurch gekennzeichnet,dass**
der Abtriebsverzahnungsteilkreis (21) hinsichtlich einer in Richtung der Antriebsverzahnung (3) gekrümmten Zahnkette (1; 101; 201) eine größere Abtriebsverzahnungsteilung (25) als die Teilung (26) des Gelenköffnungsteilkreises (20) aufweist

8. Beidseitig verzahnte Zahnkette (101) nach einem der Ansprüche 1 bis 7,
**dadurch gekennzeichnet,dass**
die beidseits verzahnte Zahnkette (101) Führungslaschen umfasst, welche nur einseitig, vorzugsweise an der Antriebsverzahnung (3), führungswirkend ausgeführt sind.

9. Beidseitig verzahnte Zahnkette (1; 101; 201) nach einem der Ansprüche 1 bis 8,
**dadurch gekennzeichnet, dass**
die Gelenkglieder (6) jeweils ein Wiegegelenk (16) umfassen.

10. Beidseitig verzahnte Zahnkette (1; 101; 201) nach einem der Ansprüche 1 bis 9,
**dadurch gekennzeichnet, dass**
abtriebsverzahnungsseitig (12) orientierte Abtriebszähne (60; 29A, 29B) der Zahnlaschen (5) bezogen auf den Gelenköffnungsteilkreis (20) höher ausgestaltet sind als antriebsverzahnungsseitig (7) orientierte Antriebszähne (61) der Zahnlaschen (5) bezogen auf den Gelenköffnungsteilkreis (20).

11. Beidseitig verzahnte Zahnkette (1; 101; 201) nach einem der Ansprüche 1 bis 10,
**dadurch gekennzeichnet, dass**
abtriebsverzahnungsseitig (12) orientierte Abtriebszähne (60; 29A, 29B) der Zahnlaschen (5) einen Halbwertsbreitenwert (64) aufweisen, welcher größer ist als ein Halbwertsbreitenwert (65) der antriebsverzahnungsseitig (7) orientierten Antriebszähne (61) der Zahnlaschen (5).

12. Beidseitig verzahnte Zahnkette (1; 101; 201) nach einem der Ansprüche 1 bis 11,
**dadurch gekennzeichnet,dass**
abtriebsverzahnungsseitig (12) orientierte Abtriebszähne (60; 29A, 29B) der Zahnlaschen (5) gekappte Zahnenden (66) aufweisen und antriebsverzahnungsseitige (7) orientierten Antriebszähne (61) der Zahnlaschen (5) spitzer zulaufende Zahnenden (67).

13. Anordnung (2; 102; 202) aus wenigstens einer beidseits verzahnten Zahnkette (1; 101; 201) mit einer Antriebsverzahnung (3) und mit einer Abtriebsverzahnung (4) und aus wenigstens einer Außenverzahnung (14; 37) einer Zahnketteneingriffseinrichtung (13; 38), bei welcher die Abtriebsverzahnung (4) und die Außenverzahnung (14; 37) in einem Kämmbereich (23) miteinander kämmen, und bei welcher die Abtriebsverzahnung (4) einen Abtriebsverzahnungsteilkreis (21) formuliert,
**dadurch gekennzeichnet, dass**
der Abtriebsverzahnungsteilkreis (21) innerhalb der Außenverzahnung (14; 37) der Zahnketteneingriffseinrichtung (13; 38) angeordnet ist.

14. Anordnung (2; 102; 202) nach Anspruch 13,
**dadurch gekennzeichnet, dass**
der Abtriebsverzahnungsteilkreis (21) im Kämmbereich (23) mit einem Außenverzahnungsteilkreis (24) der Außenverzahnung (14; 37) zumindest teilweise zusammenfällt oder den Außenverzahnungsteilkreis (24) tangiert.

15. Anordnung (2; 102; 202) nach Anspruch 13 oder 14,
**dadurch gekennzeichnet, dass**
die Zahnketteneingriffseinrichtung (13; 38) ein Zahnkettenrad (13) oder eine Zahnstange (38) umfasst.

16. Anordnung (2; 102; 202) nach einem der Ansprüche 13 bis 15,
**gekennzeichnet durch**
eine beidseitig verzahnte Zahnkette (1; 101; 201) nach einem der Ansprüche 1 bis 9.
